# EUROPEAN PATENT SPECIFICATION

(11) **EP 2 607 205 B1**
(45) Date of publication and mention of the grant of the patent: **29.06.2016**
(21) Application number: 12152470.6
(22) Date of filing: 25.01.2012
(51) Int. Cl.: B62D 1/184, B62D 1/187

(54) **A steering column arrangement**
Lenksäulenanordnung
Agencement de colonne de direction

(30) Priority: 19.12.2011 EP 11194406
(43) Date of publication of application: 26.06.2013
(73) Proprietor: Autoliv Development AB, 447 83 Vårgårda (SE)
(72) Inventor: Haglund, Lennart, 44732 Vargarda (SE)
(74) Representative: Beattie, Alex Thomas Stewart

(56) References cited:
- WO-A1-2008/103121
- DE-A1-102010 013 522

## Description

This invention relates to a steering column arrangement, and in particular an arrangement that allows the angle of tilt and effective length of the steering column to be adjusted.

There are currently several different types of mechanisms available for allowing the angle of tilt and effective length of a vehicle's steering column to be adjusted. One combined mechanism for achieving both of these functions is shown in EP 0671308. This document discloses an arrangement which has an outer holder or box, with an inner unit which may slide within the outer box to increase or decrease the effective length of the steering column. The inner unit may also tilt with respect to the outer box around a pivot axis. A clamping arrangement involving a pair of powered lever arms is operable to clamp the inner unit in place with respect to the outer box, thus fixing the angle of tilt and effective length of the steering column. The clamping arrangement can, however, be selectively deactivated to allow adjustment of the steering column.

DE102010013522 discloses a device according to the preamble of claim 1, said device having a carriage connected to a steering wheel shaft housing by a joint and shiftably formed relative to a rail in a vehicle. A steering element is connected with the steering wheel shaft housing by another joint and shiftably formed relative to the carriage and the rail. A locking device restrains the mutual movements between the rail, the carriage and the steering element, when a preferential steering wheel position is adjusted. The locking device is designed as a pneumatically actuated clamp device or compression joint.

It is an aim of the present invention to provide an improved mechanism of this type.

Accordingly, one aspect of the present invention provides a steering column arrangement comprising: a fixed part; a movable part, which may slide with respect to the fixed part to increase or decrease the length of the steering column; a steering column mounting arrangement which is rotatably mounted with respect to the movable part about a pivot axis; a plurality of elongate connection arrangements each connected at a first end thereof to the steering column mounting arrangement at a point which is spaced apart from the pivot axis, so that the connection arrangement moves in a linear manner with respect to the movable part when the steering column mounting arrangement rotates with respect to the movable part; and a clamping arrangement which is mounted on the movable part and which is selectively activatable to apply a clamping force to the fixed part and to a second end of each of the connection arrangements, to prevent sliding of the movable part with respect to the fixed part, and also to prevent sliding of the connection arrangements with respect to the movable part, wherein friction elements are interleaved between the connection arrangements.

Advantageously, when the steering column mounting arrangement rotates with respect to the movable part, the connection arrangements move with respect to the movable part in a direction which is substantially parallel with the direction in which the movable part slides with respect to the fixed part to increase or decrease the length of the steering column.

Preferably, the movable part has a major surface which is substantially flat, and the clamping arrangement is positioned to apply a clamping force in a direction that is substantially perpendicular to the major surface.

Conveniently, the clamping arrangement comprises an actuator element.

Advantageously, the actuator element passes through a slot in each of the connection arrangements.

Preferably, the actuator element moves along the slot when the steering column mounting arrangement rotates with respect to the movable part.

Conveniently, when the clamping arrangement is activated, the actuator element is pushed outwardly from the clamping device.

Advantageously, retaining element is mounted on an end of the actuator element and, when the clamping arrangement is in a clamping state, a part of the fixed part and a part of the second end of the connection arrangements are clamped between the retaining element and a surface of the clamping arrangement.

Preferably, when the clamping arrangement is activated, the actuator element is drawn into the clamping arrangement.

Conveniently, a mounting flange is fixed to the actuator element and, when the clamping arrangement is in a clamping state, a part of the movable part and a part of the second end of the connection arrangements are clamped between the clamping flange and the fixed part.

Advantageously, the fixed part has a slot formed therein through which the actuator element passes, and the movable part may slide with respect to the fixed part through a range limited by the length of the slot.

Preferably, the clamping arrangement is connected to the connection arrangements by a leverage member, to magnify the force that can be exerted on the connection arrangements by the clamping arrangement.

Conveniently, the clamping arrangement is pneumatically or hydraulically driven.

Advantageously, the arrangement further comprises a balance spring to exert a force on the steering column mounting arrangement in a direction to tilt the steering column mounting arrangement upwardly, to prevent the steering column mounting arrangement from pivoting downwardly under its own weight, and/or the weight of a steering wheel attached to the steering column mounting arrangement, when the clamping arrangement is not activated.

Another aspect of the present invention provides a method of assembling an arrangement according to any of the above, comprising the steps of: pre-assembling a unit comprising the steering column mounting arrangement, the clamping arrangement and the connection arrangements; inserting the movable part into the fixed part; and inserting the pre-assembled unit into the movable part.

In order that the present invention may be more readily understood, embodiments thereof will now be described, by way of example, with reference to the accompanying drawings, in which:

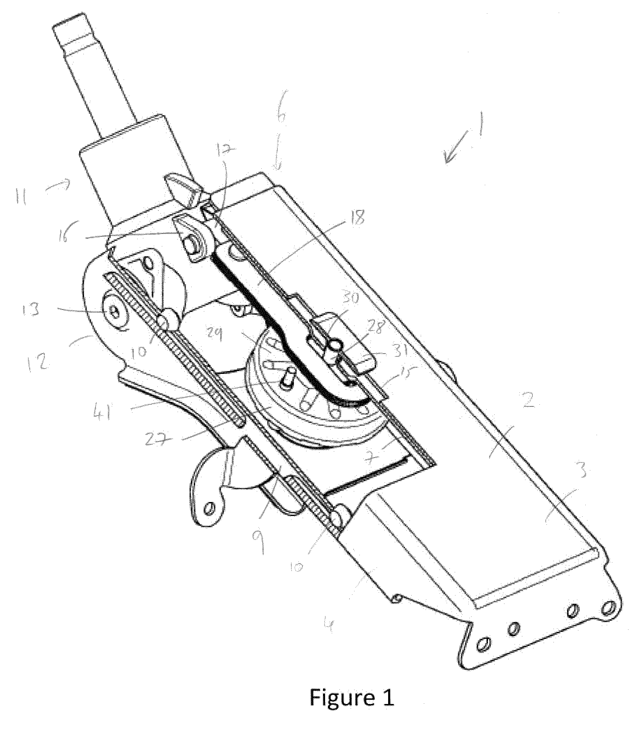

Figures 1 and 2 show a first arrangement embodying the present invention;
Figure 3 is a close-up view of a connection element of the first arrangement;
Figure 4 illustrates a method of assembling the first arrangement;
Figures 5 and 6 show a second arrangement embodying the present invention; and
Figure 7 shows an example which does not form part of the claimed invention. Referring firstly to figures 1 and 2, a first steering column arrangement 1 embodying the present invention is shown. The steering column arrangement 1 has a housing arrangement comprising an outer housing 2, which in use will be fixed in place with respect to the chassis of the vehicle. The outer housing 2 is generally box-shaped, having a top wall 3, side walls 4 and a bottom wall 5. At a front end 6 the outer housing 2 is open.

An inner, movable housing 7 is provided within the outer housing 2. The shape of the inner housing 7 generally matches that of the outer housing 2, and the inner housing 7 has a top wall 8, side walls 9 and a bottom wall.

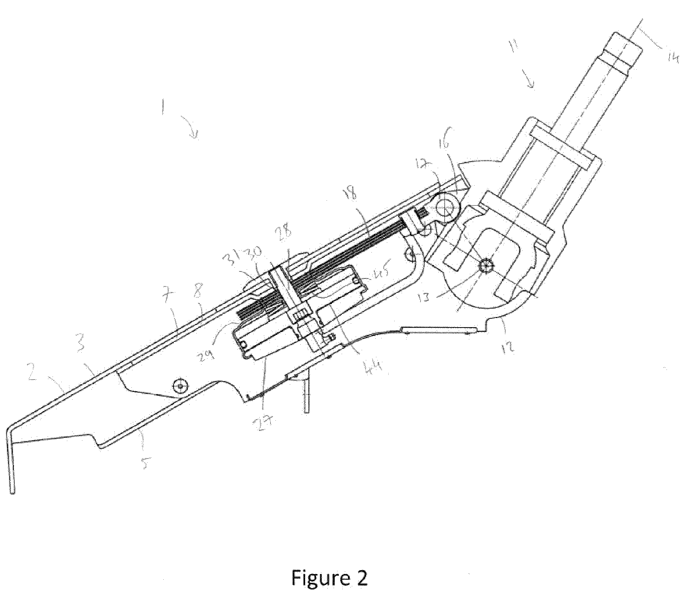

The inner housing 7 may slide inwardly and outwardly with respect to the outer housing 2, so that the inner housing protrudes by a greater or lesser extent from the open front end 6 of the outer housing 2 (in this description, the "forward" direction generally refers to the direction passing towards the driver from the bonnet of the vehicle, i.e. to the right in figure 2, and the front 6 of the outer housing 2 is the part that lies closest to the driver). In the depicted embodiment a bearing arrangement in the form of wheels 10 is provided to allow this sliding motion to occur with relative ease.

A steering column mounting arrangement 11 is pivotally attached to the inner housing 7. In the depicted embodiment the side walls 9 of the inner housing 7 have enlarged lobes 12 at their forward ends, and pivot pins 13 are rotatably mounted in aligned apertures formed through these lobes 12. The steering column mounting arrangement 11 is rotatably mounted on the pivot pins 13. The steering column mounting arrangement 11 has a main axis 14, and in use a steering wheel (not shown) will be mounted directly or indirectly on the steering column mounting arrangement 11.

Those skilled in the art will appreciate that, as the inner housing 7 slides with respect to the outer housing 2, the effective length of the steering column will change, as the steering wheel, which is mounted on the inner housing 7, is moved towards, or away from, the position occupied by a driver in use of the vehicle. Also, rotation of the steering column mounting arrangement 11, through pivoting about the pivot pins 13 with respect to the inner housing 7, will allow the mounting angle of the steering wheel to change, so that the steering wheel may be tilted up or down with respect to the driver's seat. These two motions will allow the position of the steering wheel to be adjusted to accommodate the dimensions and/or preferences of the driver.

An elongate slot 15 is formed in the top wall 3 of the outer housing 2. The slot 15 is generally aligned with the direction in which the inner housing 7 may slide with respect to the outer housing 2, and, in the depicted embodiment, is generally centrally positioned on the top wall 3.

A pivotal connection 16 is provided on a top surface of the steering column mounting arrangement 11, preferably in the region thereof that is generally enclosed by the inner housing 7. A link member 17 is attached to the pivotal connection 16, so that the link member 17 may pivot freely with respect to the connection 16.

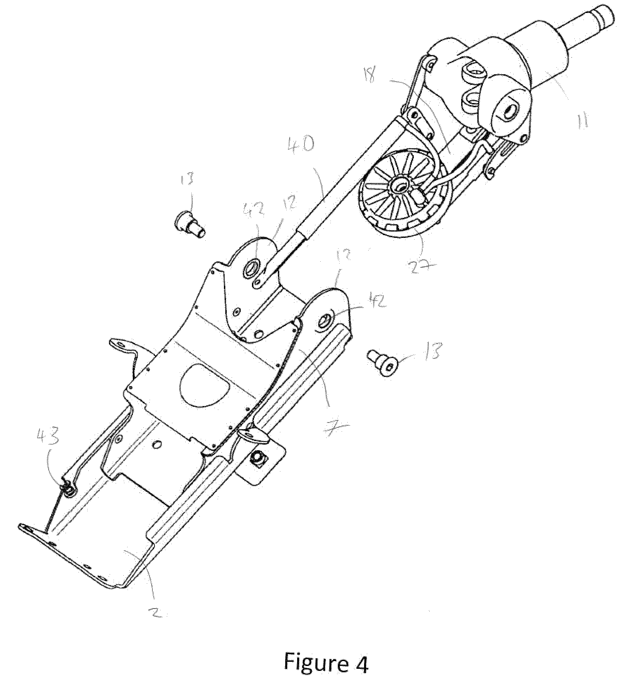

A plurality of connection elements 18 are attached to the link member 17. An exploded view of the link member 17, and four connection elements 18, is shown in figure 3 (although it should be understood that any number of connection elements 18, including just one connection element 18, may be used).

In the depicted embodiment, each connection element 18 has an elongate main body 19, having an attachment hole 20 in a proximal end 21 thereof, through which a fixing bolt 22 may be passed to fix the attachment element to the link member 17. Near the distal end 23 of the main body 19, an elongate slot 24 is formed. The slot 24 is formed to be generally aligned with the length of the main body 19.

Friction elements 25 are interleaved between the connection elements 18. Each friction element 25 may take the form of a generally flat element (disc-shaped, in the depicted embodiment) having an aperture 26 formed therethrough. The friction elements 25 are arranged with respect to the connection elements 18 so that the apertures 26 thereof are generally aligned with the slots 24.

The connection elements 18, when they are attached to the steering column mounting arrangement 11 via the link element 17, extend generally into the inner housing 7, close to the top wall 8 thereof, and the slots 24 of the connection elements 18 are generally in line with the slot 15 formed in the top wall 3 of the outer housing 2.

A clamping arrangement 27 is provided within the inner housing 7. In the embodiment shown, the clamping arrangement 27 takes the form of a pneumatic clamping arrangement. Other types of clamping arrangement, such as hydraulic clamping arrangements, may be used with the present invention. It is envisaged that the clamping element may be activated by way of a switch or other control located in the cabin of the vehicle.

An actuator element in the form of an actuator pin 28 extends from a top surface 29 of the clamping arrangement 27. The actuator pin 28 protrudes from the top surface 29 by a set distance when the clamping arrangement is in its default or "resting" position. When the clamping arrangement 27 is activated (in the depicted embodiment, by the introduction of pressurised gas into a piston 44) the actuator pin 28 is pushed outwards away from the top surface 29 of the clamping arrangement 27. In some embodiments the piston 44 may be formed integrally with the actuator pin 28.

The clamping arrangement 27 is arranged so that the actuator pin 28 passes through the slots 24 in the connection elements 18, through the apertures 26 of the friction elements 25, through a receiving aperture 30 which is formed in the top wall 8 of the inner housing 7, and through the slot 15 formed in the top wall 3 of the outer housing 2. A bolt head 31 is fixed to the top end of the actuator pin 28, and tightened sufficiently that the connection elements 18, friction members 25, and top walls 8, 3 of the inner and outer housings, 7, 2 will be clamped between the top surface 29 of the clamping arrangement 27 and the underside of the bolt head 31.

It will therefore be understood that, when the clamping arrangement 27 is in its default state, these components will be strongly prevented from sliding with respect to one another. This corresponds to the "locked" state of the steering column arrangement 1.

When the clamping arrangement 27 is activated, the actuator pin 28 is pushed outwardly therefrom, effectively pushing the top wall 3 of the outer housing 2 away from the clamping arrangement. It will be understood that this will significantly reduce the frictional forces between the top wall 8 of the inner housing 7 and the connection elements 18, and also between the top wall 3 of the outer housing 2 and the bolt head 31. These components may therefore slide with respect to one another much more easily. This corresponds to the "unlocked" state of the steering column arrangement 1.

It will be understood that, when the clamping arrangement 27 is in its default state, the inner housing 7 may therefore not slide with respect to the outer housing 2. The effective length of the steering column will therefore be fixed. The connection elements 18 will also not be able to slide with respect to the inner housing 7. This means that the angle of the main axis 14 of the steering column mounting arrangement 11 will effectively be fixed with respect to the inner housing 7.

When the clamping arrangement 27 is activated, however, the inner housing 7 may be slid back and forth with respect to the outer housing 2, therefore allowing the effective length of the steering column to be changed. It will be understood that the limits of the sliding motion will be defined by the length of the slot 15 in the top wall through of the outer housing 2. The inner housing 7 may slide forward with respect to the outer housing 2 (i.e. to lengthen the steering column) until the actuator pin 28 reaches the rear end of the slot 15 (i.e. the end furthest from the driver), and conversely the inner housing 7 may be slid rearwardly (i.e. to shorten the steering column) until the actuator pin 28 reaches the forward end of slot 15.

In addition, since the connection elements 18 may slide with respect to the inner housing 7, the steering column mounting arrangement 11 may be pivoted with respect to the inner housing 7. It will be understood that the range of angles through which the steering column mounting arrangement 11 may be tilted will depend on the length of the slots 24 formed through the connection elements 18. If the steering wheel is tilted downwardly, the connection elements 18 will slide forwardly with respect to the actuator pin 28 until the actuator pin 28 reaches the rear end of the slots 24. Conversely, if the steering wheel is tilted upwardly, the connection elements 18 will slide rearwardly with respect to the actuator pin 28 until the actuator pin 28 reaches the forward ends of the slots 24.

It will therefore be understood that, when the clamping arrangement 27 is activated, both the effective length of the steering column and the angle of tilt of the steering wheel may be adjusted. When the clamping arrangement 27 is deactivated, the steering wheel will be fixed in place.

It will be understood that this arrangement may be significantly more compact than the prior art arrangement discussed above, as lever arms or the like are not required.

An anti-rotation pin 41 is formed on the top surface 29 of the clamping arrangement 27, to prevent the clamping arrangement from rotating with respect to the inner housing 7.

In preferred embodiments the friction surfaces which are provided to prevent sliding of the connection elements 18 with respect to the clamping arrangement 27 are larger than the friction surfaces that are provided to prevent sliding of the inner housing 7 with respect to the outer housing 2. This is because, if tilting forces are exerted on the steering wheel, these forces are effectively magnified because the distance from the pivot pins 13 to the steering wheel is significantly longer than the distance from the pivot pins 13 to the connection 16 to which the link member 17 is connected.

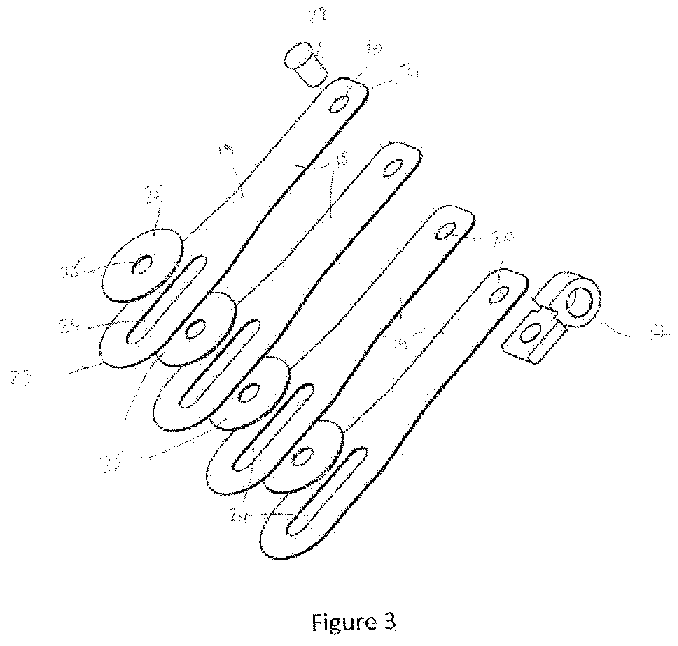

Figure 4 schematically illustrated a simplified way of assembling the steering column arrangement 1. Figure 4 shows the underside of the arrangement 1. The inner housing 7 is pre-fabricated in a box shape and can then be inserted into the outer housing 2.

In a next step, a pre-assembled unit comprising the steering column mounting arrangement 11, the clamping arrangement 27 and the connection elements 18, along with a balance spring 40 can be inserted through the opening at the front end 6 of the inner housing 7. The pivot pins 13 can then be inserted through apertures 42 in the lobes 12 of the inner housing 7, to fix the steering column mounting arrangement 11 rotatably in place with respect to the inner housing 7.

The balance spring 40 is, in the depicted embodiments, a gas spring, which is fixed at one end to the steering column mounting arrangement 11, and at the other end to a fixing point 43 provided at a rear end of the outer housing 2. The purpose of the balance spring 40 is to prevent the steering column mounting arrangement 11 from falling down to its lowest position when the clamping arrangement 27 is released, under the weight of the steering wheel.

In the embodiments described above, the clamping arrangement 27 is a "pull type" clamping arrangement. This means that, when the clamping arrangement 27 is in its default, "locked" state, the actuator pin 28 is effectively pulled into the clamping arrangement 27. In the depicted embodiment the pulling is achieved by springs 45 provided beneath the top surface 29 of the clamping arrangement 27. These springs 45 are "loaded" when the bolt head 31 is initially tightened during assembly.

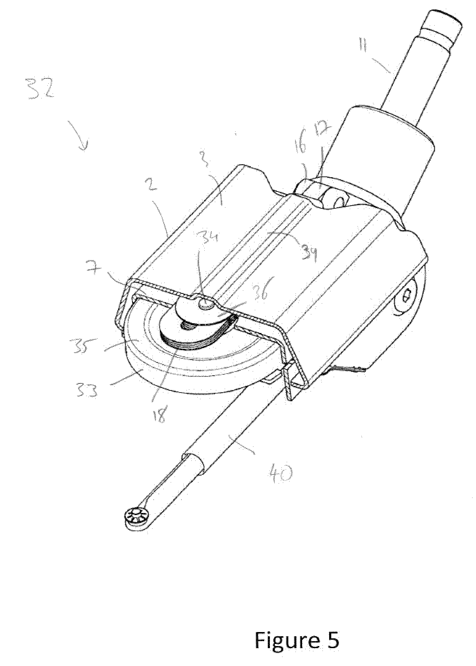

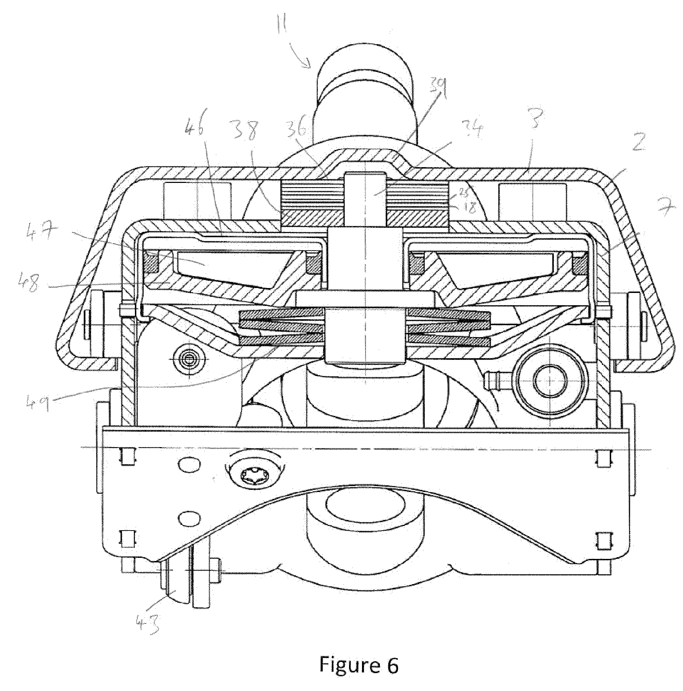

Figures 5 and 6 show parts of an alternative arrangement 32 which uses a "push type" clamping arrangement 33. This clamping arrangement 33 has an actuator pin 34 which protrudes by a set distance from the top surface 46 of thereof in a default state, and which is pulled inwardly when activated, so that the actuator pin 34 protrudes by a smaller distance. With reference to figure 6, it can be seen that, when pressurised air is introduced into a chamber 47, a piston 48 is pushed downwardly against one or more compression springs 49, thus withdrawing the actuator pin 34 into the clamping arrangement 33. The piston 48 may be formed integrally with the actuator pin 34.

In preferred embodiments the or each compression spring 49 is partially pre-biased in the default or rest state of the clamping arrangement 33, When the clamping arrangement 33 is activated, the or each compression spring 49 is further compressed, preferably by the maximum possible amount.

As before, the alternative arrangement includes an outer housing 2 and an inner housing 7 which may slide with respect to the outer housing 2.

In this arrangement 32, a mounting flange 38 is fixed in place near a lower end of the actuator pin 34. The connection elements 18, and interleaved friction members 25, lie on top of the mounting flange 38. Finally, a load-distributing friction element 36 lies on top of the connection elements 18. The load-distributing friction member 36 is, in the illustrated embodiment, generally disc-shaped, with an aperture formed therethrough, and may slide upwardly and downwardly with respect to the actuator pin 34.

In the embodiments shown, no slot is provided in the top wall 3 of the outer housing 2. Instead, a domed ridge 39 runs along the centre of the top wall 3, generally in line with the actuator pin 34.

When the clamping arrangement 33 is in its default, locked state, the connection elements 18 and friction members 25 are sandwiched tightly between the top surface of the mounting flange 38 and the bottom surface of the load-distributing friction member 36. This may be achieved, for example, by providing a threaded connection between the mounting flange 38 and the actuator pin 34, and advancing the mounting flange 38 along the actuator pin 34 by an appropriate distance. The free end of the actuator pin 34 will be pushed upwardly into the interior of the domed ridge 39, and the top surface of the load-distributing friction member 36 will be pressed tightly against the underside of the top wall 3 of the outer housing 2, on either side of the domed ridge 39.

As this occurs, the bottom wall (or anther lower part) of the inner housing 7 will preferably press against the bottom wall (or another lower part) of the outer housing 2. This provides further frictional resistance to the inner housing 7 sliding with respect to the outer housing 2.

Sliding of the inner housing 7 within the outer housing 2, and of the connection elements 18, is therefore prevented.

When the clamping arrangement 33 is activated, the distance between the mounting flange 38 and the load-distributing friction member 36 is increased, and the inner and outer housings 7, 2 may slide with relative ease with respect to one another, and the connection elements 18 may also slide with respect to the inner housing 7. As discussed above, this allows adjustment of both the length and angle of the steering column.

In other embodiments of this type, the load-distributing friction member 36 may be omitted, particularly if one or a small number of connection elements 18 are used, and/or if no friction members 25 are used.

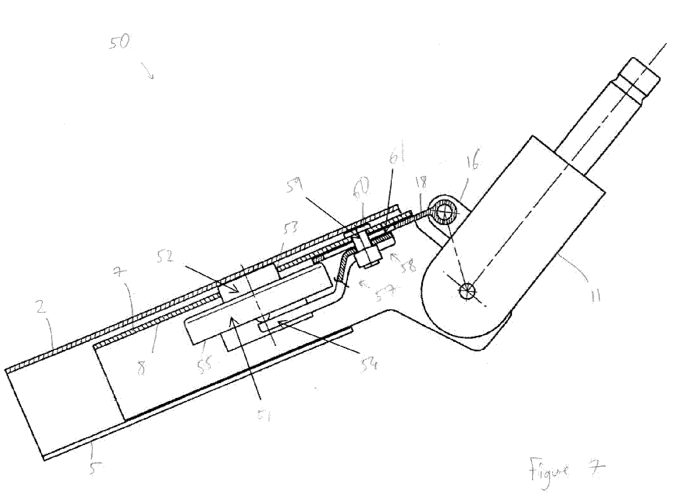

Referring to figure 7, an arrangement 50 is shown schematically. This arrangement includes several features in common with the first and second arrangements 1, 32 discussed above, including inner and outer housings 7, 2 and a steering column mounting arrangement 11 along with a pivotal connection 16 which is pivotally attached to a connection element 18.

The arrangement includes a clamping arrangement 51, which is preferably attached to one or both of the side walls of the inner housing 7. The clamping arrangement has an actuator pin 52 protruding from a top side thereof. The actuator pin 52 is preferably wider in cross-section than the actuator pins 28, 34 of the first and second arrangements 1, 32. The actuator pin 52 passes through a close-fitting aperture 53 in the top wall 8 of the inner housing 7 and, in a default or "rest" position, presses against the underside of the top wall 3 of the outer housing 2, thus preventing the inner and outer housings 7, 2 from sliding with respect to one another.

When the clamping arrangement 51 is activated, the actuator pin 52 is withdrawn into the clamping arrangement 51 ("push type"). The actuator pin 52 therefore no longer presses against the top wall 3 of the outer housing 2, or presses against the top wall 3 with a reduced force, thereby allowing the inner and outer housings 7, 2 to slide with respect to one another. It will be understood how, in a manner similar to the second arrangement 32, the clamping arrangement 51 locks the effective length of the steering column in its default state, and may be activated to allow the length to be altered.

A lever arm 54 it attached, at a first end 56 thereof, to the underside 55 of the clamping arrangement 51. A middle section 57 of the lever arm 54 is angled with respect to the first end 56, and a second end 58 is generally parallel with the first end 56 and lies against the underside of the connection element 18, in the region between the clamping arrangement 51 and the front end 6 of the outer housing 2. An aperture is formed through the lever arm 54, at or near the second end 58. A bolt 59 passes through the aperture, though the elongate slot 24 of the connection element 18, and through an aperture formed in the top wall 8 of the inner housing 7. A bolt head 60 is fixed to the distal end of the bolt 59.

In the default state of the clamping arrangement 51, the second end 58 of the lever arm 54 contacts the connection element 18 at a point 61, which (in the depicted embodiment) is at its very end. This point 61 therefore acts as a pivot point for the lever arm 54. The point at which the bolt 59 passes through the lever arm 54 is spaced apart from the pivot point and, in the default state of the clamping arrangement 51, the lever arm 54 exerts a downward force on the bolt 59, so that the bolt head 61 is pressed firmly against the upper side of the top wall 8 of the inner housing 7. The connection element 18 is therefore clamped between the lever arm 54 and the top wall 8, preventing the connection element 18 from sliding with respect to the inner housing 7. As will be understood from the discussion above, this will prevent the angle of the steering column mounting arrangement 11 with respect to the inner housing 7 from being altered.

When the clamping arrangement 51 is activated, the actuator pin 52 is withdrawn into the clamping arrangement 51 and so the clamping arrangement 51 will receive a reduced reaction force from the top wall 3 of the outer housing 2. The first end 56 of the lever arm 54 will therefore deflect upwardly towards the top walls 3, 8 of the outer and inner housings 2, 7. It will be understood that, as this occurs, the lever arm will pivot around the pivot point 61, and will exert a reduced downward force on the bolt 59. The clamping forces on the connection element 18 will therefore be removed or reduced, allowing the connection element 18 to slide with respect to the inner housing 7. The angle of the steering column mounting arrangement 11 with respect to the inner housing 7 may therefore be altered.

Therefore, when the clamping arrangement 51 is activated, both the effective length and angle of the steering column may be adjusted. Furthermore, the use of the pivot arm 54 allows increased clamping forces to be applied to the connection element 18 (through the mechanical advantage arising from the different distances of the clamping arrangement 51 and bolt 59 from the pivot point 61).

It will be appreciated by those skilled in the art that one or more lever arms may be used to exert clamping forces to control either or both of the length and tilt adjustment of the steering column. A lever arm may be used to vary the direction in which clamping forces act, alternatively or in addition to the magnification of forces produced by a clamping arrangement.

In the example of figure 7, the clamping arrangement acts at a first point on the lever arm, and the lever arm exerts a force to prevent sliding and/or tilting of the steering column at a second point which is between the first point and the pivot point of the lever arm. In a second embodiment, the clamping arrangement acts at a first point on the lever arm, and the lever arm exerts a force to prevent sliding of the steering column on one side of the first point, and exerts a force to prevent tilting of the steering column on the side of the first point. In a third embodiment, the clamping arrangement acts at a first point on the lever arm, and the lever arm exerts a force to prevent sliding or tilting of the steering column at a second point, and exerts a force to prevent the other of sliding or tilting at a third point which is between the first point and the second point. The skilled person will recognise that other practical arrangements are possible.

While the above embodiments have been described with reference to inner and outer housings that generally define internal spaces, it should be understood that one or both of the housings may be replaced by an element, such as a bracket, that does not take the form of a housing.

It will be understood that embodiments of the present invention can provide compact and effective clamping for steering column arrangements. In some embodiments, the use of lever arms can be avoided, thus leading to a compact arrangement which maximises the available space for a driver's legs. Embodiments of the invention allow a clamping force to be applied at a single location (rather than at two or more separate locations, as is the case with some of the prior art systems), and for large surface areas to be available to exert frictional forces on one another. Embodiments of the invention also allow the use of a relatively simple mechanism, in which clamping forces can be exerted in substantially the same direction to control the adjustment of the length and tilt of the steering column.

When used in this specification and claims, the terms "comprises" and "comprising" and variations thereof mean that the specified features, steps or integers are included. The terms are not to be interpreted to exclude the presence of other features, steps or components.

## Claims

1. A steering column arrangement (1, 32, 50) comprising:
a fixed part (2);
a movable part (7), which may slide with respect to the fixed part (2) to increase or decrease the length of the steering column;
a steering column mounting arrangement (11) which is rotatably mounted with respect to the movable part (7) about a pivot axis;
a plurality of elongate connection arrangements (18) each connected at a first end (21) thereof to the steering column mounting arrangement (11) at a point which is spaced apart from the pivot axis, so that the connection arrangements (18) move in a linear manner with respect to the movable part (7) when the steering column mounting arrangement (11) rotates with respect to the movable part (7); and
a clamping arrangement (27, 33, 51) which is mounted on the movable part (7) and which is selectively activatable to apply a clamping force to the fixed part (2) and to a second end (23) of each of the connection arrangements (18), to prevent sliding of the movable part (7) with respect to the fixed part (2), and also to prevent sliding of the connection arrangements (18) with respect to the movable part (7),
wherein friction elements (25) are interleaved between the connection arrangements (18).

2. An arrangement (1, 32, 50) according to claim 1 wherein, when the steering column mounting arrangement (11) rotates with respect to the movable part (7), the connection arrangements (18) move with respect to the movable part (7) in a direction which is substantially parallel with the direction in which the movable part (7) slides with respect to the fixed part (2) to increase or decrease the length of the steering column.

3. An arrangement (1, 32, 50) according to claim 1 or 2, wherein the movable part (7) has a major surface (8) which is substantially flat, and the clamping arrangement (27, 33, 51) is positioned to apply a clamping force in a direction that is substantially perpendicular to the major surface (8).

4. An arrangement (1, 32, 50) according to claim 3, wherein the clamping arrangement (27, 33, 51) comprises an actuator element (28, 34, 52).

5. An arrangement (1, 32) according to claim 4, wherein the actuator element (27, 33) passes through a slot (24) in each of the connection arrangements (18).

6. An arrangement (1, 32) according to claim 5, wherein the actuator element (27, 33) moves along the slot (24) when the steering column mounting arrangement (11) rotates with respect to the movable part (7).

7. An arrangement (1, 50) according to one of claims 4 to 6 wherein, when the clamping arrangement (27, 51) is activated, the actuator element (28, 52) is pushed outwardly from the clamping arrangement (27, 51).

8. An arrangement (1) according to claim 7 wherein a retaining element (31) is mounted on an end of the actuator element (28) and, when the clamping arrangement (27) is in a clamping state, a part of the fixed part (2) and a part of the second end (23) of the connection arrangements (18) are clamped between the retaining element (31) and a surface of the clamping arrangement (28).

9. An arrangement (32) according to any one of claims 4 to 6 wherein, when the clamping arrangement (33) is activated, the actuator element (34) is drawn into the clamping arrangement (33).

10. An arrangement (32) according to claim 9, wherein a mounting flange (38) is fixed to the actuator element (34) and, when the clamping arrangement (33) is in a clamping state, a part of the movable part (7) and a part of the second end (23) of the connection arrangements (18) are clamped between the mounting flange (38) and the fixed part (2).

11. An arrangement (1, 32) according to any one of claims 4 to 10, wherein the fixed part (2) has a slot (15) formed therein through which the actuator element passes (28, 23), and the movable part (7) may slide with respect to the fixed part (2) through a range limited by the length of the slot (15).

12. An arrangement (50) according to claim 4, wherein the clamping arrangement (51) is connected to the connection arrangements (18) by a leverage member (54), to magnify the force that can be exerted on the connection arrangements (18) by the clamping arrangement (51).

13. An arrangement (1, 32, 50) according to any preceding claim, wherein the clamping arrangement (27, 33, 51) is pneumatically or hydraulically driven.

14. An arrangement (1, 32, 50) according to any preceding claim, further comprising a balance spring (40) to exert a force on the steering column mounting arrangement (11) in a direction to tilt the steering column mounting arrangement (11) upwardly, to prevent the steering column mounting arrangement (11) from pivoting downwardly under its own weight, and/or the weight of a steering wheel attached to the steering column mounting arrangement (11), when the clamping arrangement (27, 33, 51) is not activated.

15. A method of assembling an arrangement (1, 32, 50) according to any preceding claim, comprising the steps of:
pre-assembling a unit comprising the steering column mounting arrangement (11), the clamping arrangement (27, 33, 51) and the connection arrangements (18);
inserting the movable part (7) into the fixed part (2); and
inserting the pre-assembled unit into the movable part (7).

## Patentansprüche

1. Lenksäulenanordnung (1, 32, 50), umfassend:
einen festen Teil (2);
einen beweglichen Teil (7), der bezogen auf den festen Teil (2) verschoben werden kann, damit die Länge der Lenksäule verlängert oder verkürzt wird;
eine Lenksäulenbefestigungsanordnung (11), die bezogen auf den beweglichen Teil (7) um eine Schwenkachse drehbar befestigt ist;
eine Mehrzahl von länglichen Verbindungsanordnungen (18), die jeweils an einem ersten Ende (21) davon mit der Lenksäulenbefestigungsanordnung (11) an einem Punkt verbunden sind, der einen Abstand zu der Schwenkachse aufweist, sodass sich die Verbindungsanordnungen (18) bezogen auf den beweglichen Teil (7) linear bewegen, wenn sich die Lenksäulenbefestigungsanordnung (11) bezogen auf den beweglichen Teil (7) dreht; und
eine Spannanordnung (27, 33, 51), die an dem beweglichen Teil (7) befestigt und gezielt betätigbar ist, damit sie eine Spannkraft auf den festen Teil (2) und auf ein zweites Ende (23) von jeder der Verbindungsanordnungen (18) ausübt, damit ein Verschieben des beweglichen Teils (7) bezogen auf den festen Teil (2) verhindert wird, und damit auch ein Verschieben der Verbindungsanordnungen (18) bezogen auf den beweglichen Teil (7) verhindert wird,
wobei Reibelemente (25) zwischen den Verbindungsanordnungen (18) angeordnet sind.

2. Anordnung (1, 32, 50) nach Anspruch 1, wobei, wenn sich die Lenksäulenbefestigungsanordnung (11) bezogen auf den beweglichen Teil (7) dreht, sich die Verbindungsanordnungen (18) bezogen auf den beweglichen Teil (7) in eine Richtung bewegen, die im Wesentlichen parallel zu der Richtung verläuft, in der der bewegliche Teil (7) bezogen auf den festen Teil (2) verschoben wird, damit die Länge der Lenksäule verlängert oder verkürzt wird.

3. Anordnung (1, 32, 50) nach Anspruch 1 oder 2, wobei der bewegliche Teil (7) eine Hauptfläche (8) aufweist, die im Wesentlichen eben ist, und die Spannanordnung (27, 33, 51) so platziert ist, dass sie eine Spannkraft in eine Richtung ausübt, die im Wesentlichen senkrecht zu der Hauptfläche (8) verläuft.

4. Anordnung (1, 32, 50) nach Anspruch 3, wobei die Spannanordnung (27, 33, 51) ein Stellgliedelement (28, 34, 52) umfasst.

5. Anordnung (1, 32) nach Anspruch 4, wobei das Stellgliedelement (27, 33) durch einen Schlitz (24) in jeder der Verbindungsanordnungen (18) verläuft.

6. Anordnung (1, 32) nach Anspruch 5, wobei sich das Stellgliedelement (27, 33) den Schlitz (24) entlang bewegt, wenn sich die Lenksäulenbefestigungsanordnung (11) bezogen auf den beweglichen Teil (7) dreht.

7. Anordnung (1, 50) nach einem der Ansprüche 4 bis 6, wobei, wenn die Spannanordnung (27, 51) betätigt ist, das Stellgliedelement (28, 52) von der Spannanordnung (27, 51) aus nach außen gedrückt wird.

8. Anordnung (1) nach Anspruch 7, wobei ein Halteelement (31) an einem Ende des Stellgliedelements (28) befestigt ist und, wenn sich die Spannanordnung (27) in einem Spannzustand befindet, ein Teil des festen Teils (2) und ein Teil des zweiten Endes (23) der Verbindungsanordnungen (18) zwischen dem Halteelement (31) und einer Fläche der Spannanordnung (28) eingespannt sind.

9. Anordnung (32) nach einem der Ansprüche 4 bis 6, wobei, wenn die Spannanordnung (33) betätigt ist, das Stellgliedelement (34) in die Spannanordnung (33) gezogen wird.

10. Anordnung (32) nach Anspruch 9, wobei ein Befestigungsflansch (38) an dem Stellgliedelement (34) befestigt ist und, wenn sich die Spannanordnung (33) in einem Spannzustand befindet, ein Teil des beweglichen Teils (7) und ein Teil des zweiten Endes (23) der Verbindungsanordnungen (18) zwischen dem Befestigungsflansch (38) und dem festen Teil (2) eingespannt sind.

11. Anordnung (1, 32) nach einem der Ansprüche 4 bis 10, wobei der feste Teil (2) einen darin ausgebildeten Schlitz (15) aufweist, durch den das Stellgliedelement verläuft (28, 23), und der bewegliche Teil (7) bezogen auf den festen Teil (2) über einen Bereich, der durch die Länge des Schlitzes (15) begrenzt ist, verschoben werden kann.

12. Anordnung (50) nach Anspruch 4, wobei die Spannanordnung (51) mit den Verbindungsanordnungen (18) über ein Hebelglied (54) verbunden ist, damit die Kraft vergrößert wird, die auf die Verbindungsanordnungen (18) von der Spannanordnung (51) ausgeübt werden kann.

13. Anordnung (1, 32, 50) nach einem vorhergehenden Anspruch, wobei die Spannanordnung (27, 33, 51) pneumatisch oder hydraulisch betrieben ist.

14. Anordnung (1, 32, 50) nach einem vorhergehenden Anspruch, die ferner eine Ausgleichsfeder (40) zum Ausüben einer Kraft auf die Lenksäulenbefestigungsanordnung (11) in einer Richtung umfasst, in der die Lenksäulenbefestigungsanordnung (11) nach oben geneigt wird, damit verhindert wird, dass die Lenksäulenbefestigungsanordnung (11) unter ihrem Eigengewicht und/oder dem Gewicht eines Lenkrads, das an der Lenksäulenbefestigungsanordnung (11) befestigt ist, nach unten schwenkt, wenn die Spannanordnung (27, 33, 51) nicht betätigt ist.

15. Verfahren zum Montieren einer Anordnung (1, 32, 50) nach einem vorhergehenden Anspruch, das folgende Schritte umfasst:
Vormontieren einer Einheit, die die Lenksäulenbefestigungsanordnung (11), die Spannanordnung (27, 33, 51) und die Verbindungsanordnungen (18) umfasst;
Einsetzen des beweglichen Teils (7) in den festen Teil (2); und
Einsetzen der vormontierten Einheit in den beweglichen Teil (7).

## Revendications

1. Agencement de colonne de direction (1, 32, 50) comprenant :
un partie fixe ;
une partie mobile (7), qui peut glisser par rapport à la partie fixe (2) pour augmenter ou réduire la longueur de la colonne de direction ;
un agencement de montage de colonne de direction (11) qui est monté rotatif par rapport à la partie mobile (7) sur un axe de pivotement ;
une pluralité d'agencements de liaison (18) allongés, chacun relié au niveau d'une première extrémité (21) de ceux-ci à l'agencement de montage de colonne de direction (11) en un point qui est espacé de l'axe de pivotement, de telle sorte que les agencements de liaison (18) se déplacent de manière linéaire par rapport à la partie mobile (7) quand l'agencement de montage de colonne de direction (11) tourne par rapport à la partie mobile (7) ; et
un agencement de serrage (27, 33, 51) qui est monté sur la partie mobile (7) et qui peut être activé de manière sélective afin d'appliquer une force de serrage sur la partie fixe (2) et sur une seconde extrémité (23) de chacun des agencements de liaison (18), afin d'empêcher le glissement de la partie mobile (7) par rapport à la partie fixe (2), et également d'empêcher le glissement des agencements de liaison (18) par rapport à la partie mobile (7),
dans lequel des éléments de frottement (25) sont intercalés entre les agencements de liaison (18).

2. Agencement (1, 32, 50) selon la revendication 1, dans lequel, quand l'agencement de montage de colonne de direction (11) tourne par rapport à la partie mobile (7), les agencements de liaison (18) se déplacent par rapport à la partie mobile (7) dans une direction qui est sensiblement parallèle à la direction dans laquelle la partie mobile (7) glisse par rapport à la partie fixe (2) afin d'augmenter ou de réduire la longueur de la colonne de direction.

3. Agencement (1, 32, 50) selon la revendication 1 ou 2, dans lequel la partie mobile (7) comporte une surface principale (8) qui est sensiblement plate, et l'agencement de serrage (27, 33, 51) est positionné pour appliquer une force de serrage dans une direction qui est sensiblement perpendiculaire à la surface principale (8).

4. Agencement (1, 32, 50) selon la revendication 3, dans lequel l'agencement de serrage (27, 33, 51) comprend un élément actionneur (28, 34, 52).

5. Agencement (1, 32) selon la revendication 4, dans lequel l'élément actionneur (27, 33) passe à travers une fente (24) dans chacun des agencements de liaison (18).

6. Agencement (1, 32) selon la revendication 5, dans lequel l'élément actionneur (27, 33) se déplace le long de la fente (24) quand l'agencement de montage de colonne de direction (11) tourne par rapport à la partie mobile (7).

7. Agencement (1, 50) selon l'une des revendications 4 à 6, dans lequel, quand l'agencement de serrage (27, 51) est activé, l'élément actionneur (28, 52) est poussé de l'agencement de serrage (27, 51) vers l'extérieur.

8. Agencement (1) selon la revendication 7, dans lequel un élément de retenue (31) est monté sur une extrémité de l'élément actionneur (28) et, quand l'agencement de serrage (27) est dans un état de serrage, une partie de la partie fixe (2) et une partie de la seconde extrémité (23) des agencements de liaison (18) sont serrées entre l'élément de retenue (31) et une surface de l'agencement de serrage (28).

9. Agencement (32) selon l'une quelconque des revendications 4 à 6, dans lequel, quand l'agencement de serrage (33) est activé, l'élément actionneur (34) est tiré à l'intérieur de l'agencement de serrage (33).

10. Agencement (32) selon la revendication 9, dans lequel une bride de montage (38) est fixée à l'élément actionneur (34) et, quand l'agencement de serrage (33) est dans un état de serrage, une partie de la partie mobile (7) et une partie de la seconde extrémité (23) des agencements de liaison (18) sont serrées entre la bride de montage (38) et la partie fixe (2).

11. Agencement (1, 32) selon l'une quelconque des revendications 4 à 10, dans lequel la partie fixe (2) comporte une fente (15) formée dans celle-ci, à travers laquelle l'élément d'actionneur passe (28, 23), et la partie mobile (7) peut glisser par rapport à la partie fixe (2) sur une étendue limitée par la longueur de la fente (15).

12. Agencement (50) selon la revendication 4, dans lequel l'agencement de serrage (51) est relié aux agencements de liaison (18) par un élément à effet de levier (54), afin d'amplifier la force qui peut être exercée par l'agencement de serrage (51) sur les agencements de liaison (18).

13. Agencement (1, 32, 50) selon l'une quelconque des revendications précédentes, dans lequel l'agencement de serrage (27, 33, 51) est à actionnement pneumatique ou hydraulique.

14. Agencement (1, 32, 50) selon l'une quelconque des revendications précédentes, comprenant en outre un ressort compensateur (40) afin d'exercer une force sur l'agencement de montage de colonne de direction (11) dans une direction permettant de basculer l'agencement de montage de colonne de direction (11) vers le haut, pour empêcher l'agencement de montage de colonne de direction (11) de pivoter vers le bas sous son propre poids, et/ou le poids d'un volant de direction raccordé à l'agencement de montage de colonne de direction (11), quand l'agencement de serrage (27, 33, 51) n'est pas activé.

15. Procédé d'assemblage d'un agencement (1, 32, 50) selon l'une quelconque des revendications précédentes, comprenant les étapes consistant à :
préassembler une unité comprenant l'agencement de montage de colonne de direction (11), l'agencement de serrage (27, 33, 51) et les agencements de liaison (18) ;
insérer la partie mobile (7) dans la partie fixe (2) ; et
insérer l'unité préassemblée dans la partie mobile (7). ___________
